# EUROPÄISCHE PATENTANMELDUNG

(11) **EP 3 130 729 A1**
(43) Veröffentlichungstag der Anmeldung: **15.02.2017**
(21) Anmeldenummer: 16161990.3
(22) Anmeldetag: 23.03.2016
(51) Int. Cl.: E05B 67/28, E05B 71/00, G07C 9/00, H04W 12/06, E05B 47/00, E05B 47/06, H04L 9/00

(54) **ELEKTRONISCHES SCHLOSS**

(30) Priorität: 07.08.2015 DE 102015113082
(71) Anmelder: Trelock GmbH, 48140 Münster (DE)
(72) Erfinder: Northoff, Ralf, 48324 Sendenhorst (DE); Sieme, Jörg, 48346 Ostbevern (DE)
(74) Vertreter: Hentrich Patentanwälte PartG mbB

(57) **Zusammenfassung**

Die Erfindung betrifft ein Schloss mit einem der Sperrung dienenden Sperrelement (1) und einem elektronisch betätigbaren Aktuator (2) mit zugeordneter RFID-Grundschaltung (3) zur Verstellung eines über ein Kopplungselement (4) mit dem Aktuator (2) verbundenen Stellglieds (5). Zwischen dem Stellglied (5) und dem Sperrelement (1) ist ein Verriegelungselement (6) angeordnet, wobei von Stellglied (5) und Verriegelungselement (6) dem einen ein Führungsglied (7) zugeordnet ist und an dem anderen eine Steuerkurve (8) ausgebildet ist, der das Führungsglied (7) zur lösbaren Verriegelung des Verriegelungselements (6) anliegt. Es ist ein mit dem Verriegelungselement (6) in Kontakt bringbares Betätigungselement (9) vorgesehen zur Entriegelung des Verriegelungselements (6) und zur Entsperrung des Sperrelements (1).

## Beschreibung

Die Erfindung betrifft ein Schloss mit einem der Sperrung dienenden Sperrelement, einem elektronisch betätigbaren Aktuator mit zugeordneter RFID-Grundschaltung zur Verstellung eines über ein Kopplungselement mit dem Aktuator verbundenen Stellglieds.

Die Erfindung betrifft weiterhin ein Verfahren zur Betätigung eines Schlosses mit einem Sperrelement und einem elektrisch betätigbaren Aktuator, welchem eine RFID-Grundschaltung zugeordnet ist.

Derartige Schlösser und ein derartiges Verfahren sind aus der EP 2733681 A2 bekannt, in der eine Schließvorrichtung und ein Verfahren zum Entriegeln und/oder Verriegeln eines Schlosses gemäß dem Oberbegriff beschrieben wird. Das Schloss weist keine eigene Spannungsquelle auf. Das Entriegeln und Verriegeln erfolgt über die elektrische Betätigung eines Aktuators. Dieser wird mit elektrischer Energie durch eine induktive Übertragung elektromagnetischer Wellen (RFID oder NFC) versorgt. Neben der elektrischen Energie wird ebenfalls ein Schlüssel von dem Endgerät auf eine Verschlüsselungs-/Entschlüsselungseinheit mittels RFID oder NFC übertragen.

Nachteilig wirkt sich hierbei aus, dass das Sperrelement und der Aktuator direkt miteinander verbunden sind, was zu einer Reduzierung der Sicherheit des Schlosses führt. Gleichzeitig muss sowohl das Öffnen als auch das Schließen des Schlosses elektrisch bzw. über eine elektrische Betätigung des Aktuators erfolgen, der wiederum Teile des Schlosses bewegt, die sehr massiv sind und daher energieintensivere Verfahren benötigen. Dies ist aufwendig in der Handhabung, da in beiden Fällen ein Endgerät aktiviert werden muss.

Aufgabe der Erfindung ist es demnach, ein elektrisch betätigbares Schloss derart weiterzuentwickeln, dass die Sicherheit erhöht wird und ein vereinfachtes Verfahren zum Entsperren und Sperren des Schlosses bei gleichzeitig hoher Sicherheit gewährleistet ist.

Diese Aufgabe wird nach der Erfindung bei einem Schloss der eingangs genannten Art dadurch gelöst, dass zwischen dem Stellglied und dem Sperrelement ein Verriegelungselement angeordnet ist, von Stellglied und Verriegelungselement dem einen ein Führungsglied zugeordnet ist und an dem anderen eine Steuerkurve ausgebildet ist, der das Führungsglied zur lösbaren Verriegelung des Verriegelungselements anliegt, und dass ein mit dem Verriegelungselement in Kontakt bringbares Betätigungselement vorgesehen ist zur Entriegelung des Verriegelungselements und zur Entsperrung des Sperrelements. Somit wird eine erhöhte Sicherheit des Schlosses dadurch erreicht, dass der elektrisch betätigbare Aktuator und das Sperrelement durch ein Verriegelungselement voneinander entkoppelt sind, so dass Missbrauchskräfte nicht auf den Aktuator wirken können. Darüber hinaus ermöglicht die Ausbildung einer Steuerkurve ein schnelles und einfaches Entsperren und Sperren des Schlosses bei minimalem Energieaufwand, da das darin bewegbare Führungsglied zum Entsperren und Sperren des Sperrelements nur kleine Bewegungen ausführen muss.

Das Betätigungselement ermöglicht ebenfalls eine energiesparende Betätigung des Schlosses und führt ebenfalls zu einer Entkoppelung von Sperrelement und Aktuator und damit auch zu einer erhöhten Sicherheit des Schlosses vor fremden Zugriffen.

Das Schloss selber bzw. der elektronisch betätigbare Aktuator weist keine eigene Energiequelle auf, das heißt das Schlossgehäuse muss keine Energiequelle aufnehmen. Dies hat den Vorteil, dass das Schloss ein geringeres Gewicht aufweist als bereits bekannte elektronische Schlösser. Die Energie für den elektronisch betätigbaren Aktuator wird mittels induktiver Übertragung elektromagnetischer Wellen, insbesondere über Radiofrequency identification (RFID) oder über Near field communication (NFC), für die RFID-Grundschaltung bereitgestellt. Dabei stellt NFC einen Spezialfall von RFID bei einer Übertragungsfrequenz von 13,56 MHz dar. Das Schloss ist folglich über ein RFID- oder NFC-Signal betätigbar, wobei es in einer bevorzugten Ausführungsform über NFC betätigbar ist. Die RFID Grundschaltung ist dabei als passive RFID-Grundschaltung gebildet und weist somit einen RFID-transponder auf. Darüber hinaus umfasst die RFID-Grundschaltung eine elektrische Energieversorgungsanordnung und einen elektrischen Schalter zwischen der elektrischen Energieversorgungsanordnung und dem Aktuator. Der RFID-Grundschaltung ist weiterhin eine Antenne zum Empfang des RFID Signals zugeordnet. Bevorzugt ist es, wenn die elektrische Energieversorgungsanordnung einen Kurzzeitenergiezwischenspeicher beispielsweise in Form eines Kondensators aufweist. Dieser Kurzzeitenergiezwischenspeicher ist elektrisch mit der RFID Grundschaltung und dem elektrischen Schalter verbunden. Der Vorteil der passiven RFID-Grundschaltung besteht darin, dass ein Energie- und Datenaustausch von einem oder mehreren externen Endgeräten mit zugeordneten RFID-Lesegeräten zu dem RFID-Transponder möglich ist. Durch diese externe Energieversorgung droht kein Energieengpass wie es bei bekannten elektronischen Schlössern häufig der Fall ist. Das Schloss gemäß der Erfindung ist folglich elektrisch betätigbar ohne das Problem eines sich leerenden Energiespeichers und eines damit folglich nicht mehr zu betätigenden Schlosses.

Im Rahmen der Erfindung ist es weiterhin vorgesehen, dass dem Stellglied das Führungsglied zugeordnet ist und dem Verriegelungselement die Steuerkurve, die als Führungsnut mit einer geschlossenen Bahn gebildet ist. Die Steuerkurve kann dabei L-förmig, polygonförmig oder polygonähnlich gebildet sein. Besonders bevorzugt ist es wenn die Führungsnut polygonähnlich mit teilweise abgerundeten Ecken gebildet ist und wenn die Steuerkurve, zum Teil asymmetrisch ausgebildet ist. Durch die Ausbildung einer Steuerkurve muss das darin geführte Führungsglied nur kleine Bewegungen ausführen die zu einer Entriegelung und Verriegelung des Schlosses führen, so dass nur ein geringer Energieaufwand von Nöten ist. Alternativ ist es möglich, dass dem Stellglied die Steuerkurve und dem Verriegelungselement das Führungsglied zugeordnet ist, und dass das Stellglied durch eine Rückstellfeder beaufschlagt.

Weiterhin hat es sich als günstig erwiesen, dass das Kopplungselement als ein Ritzel gebildet ist, das in eine Verzahnung des als eine Zahnstange gebildeten Stellglieds eingreift. Dadurch wird die Kraftübertragung zwischen Aktuator und Stellglied optimiert. Das Ritzel kann dabei auch Teil eines Getriebes sein, um den Verstellweg und/oder die Kraft für die Verstellung des Stellgliedes gegenüber den vom Aktuator bereit gestellten Größe zu variieren.

Im Rahmen der Erfindung hat es sich auch als vorteilhaft erwiesen, dass das Führungsglied als ein Führungsbolzen gebildet ist. Alternativ könnte das Führungsglied auch als eine Kugel gebildet sein.

Insbesondere ist es bei einer Ausführungsform vorgesehen, dass dem Verriegelungselement ein kraftspeicherndes Element zur Verstellung des Führungsglieds innerhalb der Steuerkurve und zur Sperrung des Sperrelements zugeordnet ist. In diesem Zusammenhang ist es bevorzugt, wenn das kraftspeichernde Element als eine Druck- und Zugfeder gebildet ist und diese gespannt ist, wenn das Schloss verriegelt ist. Das kraftspeichernde Element dient dabei als Energiespeicher für die Bewegung des Verriegelungselements im Schlossgehäuse und insbesondere des Führungsglieds innerhalb der Steuerkurve. Dadurch wird keine zusätzliche elektrische Energie für die Bewegung des Führungsglieds benötigt und ist insgesamt wenig elektrische Energie zur Betätigung des Schlosses notwendig. Gleichzeitig drückt die Feder das Verriegelungselement nach unten, so dass das Sperrelement gesichert wird.

Im Rahmen der Erfindung ist es weiterhin vorgesehen, dass das Sperrelement mindestens einen Eingriff aufweist. Besonders bevorzugt ist es dabei wenn das Sperrelement zwei Eingriffe aufweist: Einen Sperreingriff zur Sperrung des Sperrelementes, wenn das Schloss verriegelt bzw. geschlossen ist und einen Sicherungseingriff zur Sicherung des Sperrelements, wenn das Schloss entriegelt bzw. offen ist.

Weiterhin hat es sich als sinnvoll erwiesen, dass das Betätigungselement als ein federnder Taster gebildet ist. Dabei weist der Taster einen Endanschlag auf. Dadurch lässt sich der federnde Taster nicht weiter als bis zum Endanschlag mit dem Verriegelungselement in Kontakt bringen und verhindert so eine missbräuchliche Betätigung des Tasters zum Öffnen des Schlosses durch Unbefugte. Durch die Feder ist eine Maximalkraft vorgesehen, die auf das Verriegelungselement und damit auch auf das Führungsglied wirkt und die dieses innerhalb der Steuerkurve verstellt.

Dadurch wird ebenfalls die zum Verriegeln und Entriegeln des Schlosses benötigte elektrische Energie reduziert. In diesem Zusammenhang ist es besonders bevorzugt, dass dem Taster ein Keil zugeordnet ist, dessen Ende in einer am Verriegelungselement ausgebildeten Ausnehmung eingreift. Durch den Keil wird die Betätigung des Verriegelungselements vereinfacht.

Weiterhin hat es sich als günstig erwiesen, dass dem Stellglied eine Sperrfeder zugeordnet ist. Dies dient der zusätzlichen Sperrung des elektrisch betreibbaren Aktuators und damit der Sperrung der Bewegung des Führungsglieds. Diese Sperrung kann beispielsweise aufgehoben werden, indem die Sperrfeder zur gemeinsamen Verstellung mit dem Verriegelungselement zur gekoppelt ist. Vorgesehen ist außerdem, dass das am Stellglied eine Rastfläche für eine Zwischenstellung der Sperrfeder ausgebildet ist.

Die erfindungsgemäße Aufgabe wird zusätzlich durch die Kombination einer Schlüsseleinheit mit einem Schloss gelöst, wobei eine Verbindung zwischen der Schlüsseleinheit und der RFID-Grundschaltung, ein Speicherelement zur Speicherung eines oder mehrerer Aktivierungsschlüssel und ein Komparator zum Abgleich des oder der Aktivierungsschlüssel mit einem von einem externen Endgerät gesendeten Endgeräteschlüssel vorgesehen sind. Dadurch wird das Schloss nicht durch einen mechanischen Schlüssel betätigt, sondern durch einen kryptografischen Schlüssel. Insbesondere ist es vorteilhaft, wenn auf dem Speicherelement ein oder mehrere Aktivierungsschlüssel speicherbar sind, so dass verschiedene externe Endgeräte mit verschiedenen Endgeräteschlüsseln verwendbar sind. Durch die Verbindung zwischen der Schlüsseleinheit und der RFID-Grundschaltung wird es möglich, einen kryptografischen Schlüssel durch induktive Übertragung elektromagnetischer Wellen, insbesondere mittels RFID oder NFC, von einem externen Endgerät über die RFID-Grundschaltung auf die Schlüsseleinheit zu übertragen.

In diesem Zusammenhang ist es vorteilhaft, dass ein System aus mindestens einem externen Endgerät und einer vorstehend genannten Kombination vorgesehen ist, wobei das externe Endgerät ein RFID-Lesegerät umfasst. Der Endgeräteschlüssel wird folglich von dem RFID-Lesegerät übertragen. Der Komparator der Schlüsseleinheit vergleicht den Endgeräteschlüssel mit einem der auf dem Speicherglied hinterlegten Aktivierungsschlüssel. Bei Übereinstimmung der beiden Schlüssel wird der Aktuator mit elektrischer Energie versorgt, die ebenfalls über RFID oder NFC an die RFID-Grundschaltung übertragen wird. Das externe Endgerät kann dabei als Mobiltelefon, als Smartkey, als Keycard oder als ein anderes elektrisches Gerät gebildet sein. Dies hat den Vorteil, dass kein zusätzlicher mechanischer Schlüssel mitgeführt werden muss und mehrere externe Endgeräte auf ein Schloss zugreifen können. Im Gegensatz dazu existieren bei mechanischen Schlüsseln meistens nur ein Haupt- und ein Ersatzschlüssel. Weiterhin können beliebig viele externe Endgeräte die Schlüsselinformation (den Endgeräteschlüssel) auf sehr einfache Weise über eine Keycard erhalten, d.h. sie erhalten den Endgeräteschlüssel über eine elektrische Schnittstelle wie beispielsweise NFC. Der Endgeräteschlüssel muss nicht wie bei bekannten elektrischen Schlössern über eine Cloud mit einer aus sicherheitstechnischen Gründen komplizierten verschlüsselten Identifikation übertragen werden.

Die Aufgabe das Verfahren betreffend wird gelöst durch ein Verfahren, das die folgenden Schritte umfasst:
a) Schließen des Schlosses durch eine mechanische Betätigung des Sperrelements,
b) Öffnen des Schlosses durch Übertragung von elektrischer Energie und von einem Endgeräteschlüssel mittels RFID oder NFC von einem externen Endgerät auf die dem Aktuator zugeordnete RFID-Grundschaltung.

Das Öffnen erfolgt elektronisch ohne die Notwendigkeit einer internen Energiequelle mit den sicherheitstechnischen Vorteilen einer elektronischen Betätigung. Das Schließen erfolgt wiederum rein mechanisch, d.h. zeitsparend, energiesparend und einfach betätigbar.

Im Rahmen der Erfindung ist weiterhin vorgesehen, dass beim Schließen gemäß Schritt a zusätzlich ein Endgeräteschlüssel mittels RFID oder NFC von dem externen Endgerät auf die dem Aktuator zugeordnete RFID-Grundschaltung übertragen wird. Dies stellt sicher, dass das Schließen zwar nicht mittels elektrischer Energie erfolgt, allerdings trotzdem nur ein Berechtigter, nämlich derjenige der den passenden Endgeräteschlüssel auf seinem externen Endgerät aufweist, das Schloss schließen kann. In einer alternativen Ausführungsform ist es auch denkbar, dass das Schließen des Schlosses durch Übertragung von elektrischer Energie und einem Endgeräteschlüssel mittels RFID oder NFC von einem externen Endgerät auf die dem Aktuator zugeordnete RFID-Grundschaltung funktioniert.

Weiterhin umfasst das Verfahren zum Schließen des Schlosses die folgenden Schritte:
- Lösen eines Verriegelungselements aus einem Sicherungseingriff durch Verschieben des Sperrelements in eine schließende Stellung und dadurch Führung eines Führungsglieds innerhalb einer polygonförmigen Steuerkurve in eine Sperrposition,
- Eingreifen des Verriegelungselements in einen Sperreingriff und Sperrung des Sperrelements zu einer geschlossenen Stellung
- Bewegung des Führungsglieds in eine Sperrposition in der Steuerkurve.

Darüber hinaus umfasst das Verfahren zum Öffnen des Schlosses die folgenden Schritte:
- Betätigung eines externen Endgerätes und Übertragung eines Endgeräteschlüssels mittels RFID oder NFC von einem RFID-Lesegerät des externen Endgeräts auf eine mit der RFID-Grundschaltung verbundenen Schlüsseleinheit,
- Abgleich des Endgeräteschlüssels mit einem in der Schlüsseleinheit abgespeicherten Aktivierungsschlüssel,
- Bei Übereinstimmung des Endgeräteschlüssel mit dem Aktivierungsschlüssel wird elektrische Energie für den Aktuator mittels induktiver Übertragung elektromagnetischer Wellen auf die RFID Grundschaltung bereitgestellt,
- Entsperrung des Sperrelements aus einem Sperreingriff durch Entriegelung des Verriegelungselements mittels Betätigung eines mit dem Aktuator über ein Kopplungsglied verbundenen Stellglieds, welches ein Führungsglied zwischen eine Sperrposition und eine Freigabeposition der Steuerkurven bewegt,
- Bewegung des Führungsglieds in eine Freigabeposition durch Betätigung eines Betätigungsgliedes. Dadurch wird das Verriegelungselement nach oben entgegen einer Kraft des kraftspeichernden Elements verschoben,
- Sicherung des Sperrelements in einer geöffneten Position durch Lösen des Betätigungsglieds, dadurch wird das Führungsglied zwischen Sperrposition und Freigabeposition bewegt, so dass das Verriegelungselement in den Sicherungseingriff eingreift.

Zusammenfassend liegen die Vorteile der erfindungsgemäßen Vorrichtungen und des erfindungsgemäßen Verfahrens darin, dass ein Schloss dahingegen weitergebildet wird, dass es elektronisch zu öffnen aber mechanisch zu schließen ist, so dass durch das elektronische Öffnen eine hohe Sicherheit garantiert wird und durch das mechanische Schließen eine einfache Handhabung erreicht wird. Der Aufbau des Schlosses selber weist dabei keine integrierte Energieversorgung auf, sondern erhält Energie von einem RFID-Lesegerät eines externen Endgerätes mittels induktiver Übertragung elektromagnetischer Wellen (RFID oder NFC) auf die RFID-Grundschaltung bzw. den RFID Transponder im Schloss. Dies verhindert das Problem herkömmlicher elektronischer Schlösser, in Bezug auf versiegende Energiequellen und damit nicht mehr zu öffnende Schlösser. Der mechanische Schlüssel wird durch einen kryptografischen Code, der ebenfalls über RFID oder NFC auf die RFID Grundschaltung übertragen wird ersetzt. Dies hat zum einen den Vorteil, dass nicht nur ein externes Endgerät sondern mehrere externe Endgeräte das Schloss betätigen können, was nicht nur die Flexibilität für den Verbraucher erhöht, sondern auch das die Wahrscheinlichkeit für den Verlust des Schlüssels minimiert wird. Bei einem mechanischen Schlüssel existiert maximal ein Ersatzschlüssel so dass bei Verlust beider Schlüssel das Schloss unbrauchbar wird. Weiterhin garantiert das Schloss einen erhöhten Sicherheitsstandard durch die Entkopplung des Sperrelements und des Aktuators durch das Verriegelungselement. Missbrauchskräfte wirken also nicht auf den Aktuator. Durch die Ausbildung einer Steuerkurve, eines kraftspeichernden Elementes und eines Betätigungselementes erfolgt die Bewegung des Führungsglieds innerhalb der Steuerkurve energiesparend, da das Führungsglied nur kleine Bewegungen ausführen muss. Die vorliegende Erfindung zeichnet sich folglich durch hohe Sicherheit, energiesparende und anwenderfreundliche Betätigung sowie hohe Flexibilität aus.

Im Folgenden wird die Erfindung an einem in der Zeichnung dargestellten Ausführungsbeispiel näher erläutert; es zeigen:
- Fig. 1: eine Rückenansicht des erfindungsgemäßen Schlosses ohne Gehäuse mit gesperrten Sperrelement,
- Fig. 1a: das die Schlosseinheit betreffende Detail aus Figur 1,
- Fig. 2: eine perspektivische Ansicht der Figur 1,
- Fig. 2a: das die Schließeinheit betreffende Detail aus Figur 2,
- Fig. 3: eine Detailansicht der Schließeinheit nach Figur 2,
- Fig. 4: eine perspektivische Ansicht der Figur 3,
- Fig. 5: eine Rückenansicht des geöffneten Schlosses mit gedrücktem Betätigungselement,
- Fig. 6: eine Detailansicht der Schließeinheit der Figur 5,
- Fig. 7: eine perspektivische Ansicht der Figur 6,
- Fig. 8: eine Rückenansicht des geöffneten Schlosses,
- Fig. 9: eine Detailansicht der Schließeinheit der Figur 8,
- Fig. 10: eine Darstellung der Steuerkurve
a) in sperrender Konfiguration,
b) in entsperrender Konfiguration durch Aktivierung des Aktuators,
c) in entsperrender Konfiguration durch Taster drücken,
d) in geöffneter, gesicherter Konfiguration durch Taster loslassen und
e) In schließender Konfiguration mit gedrücktem Taster,
- Fig. 11: das die Schließeinheit betreffende Detail einer weiteren Ausführungsform, und
- Fig. 12: eine weitere Darstellung der Steuerkurve der weiteren Ausführungsform in
a) in sperrender Konfiguration,
b) in entsperrender Konfiguration durch Aktivierung des Aktuators,
c) in entsperrender Konfiguration durch Taster drücken,
d) in geöffneter, gesicherter Konfiguration durch Taster loslassen und
e) In schließender Konfiguration mit gedrücktem Taster.

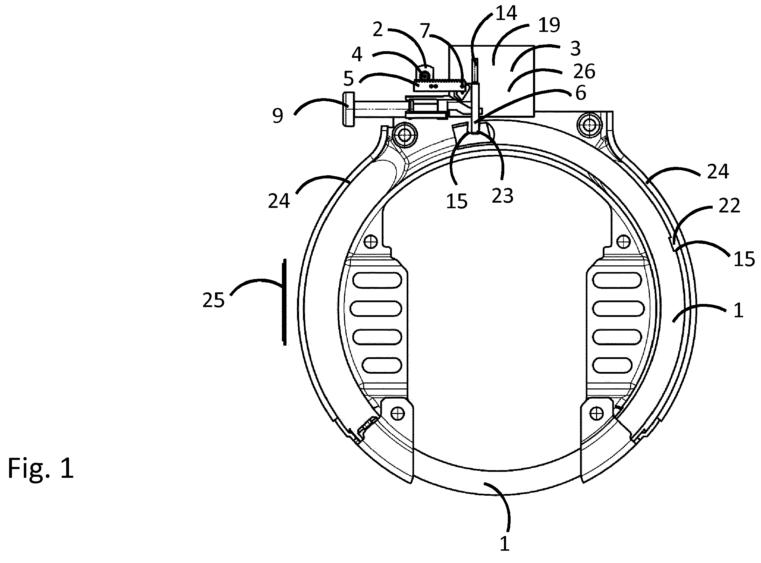

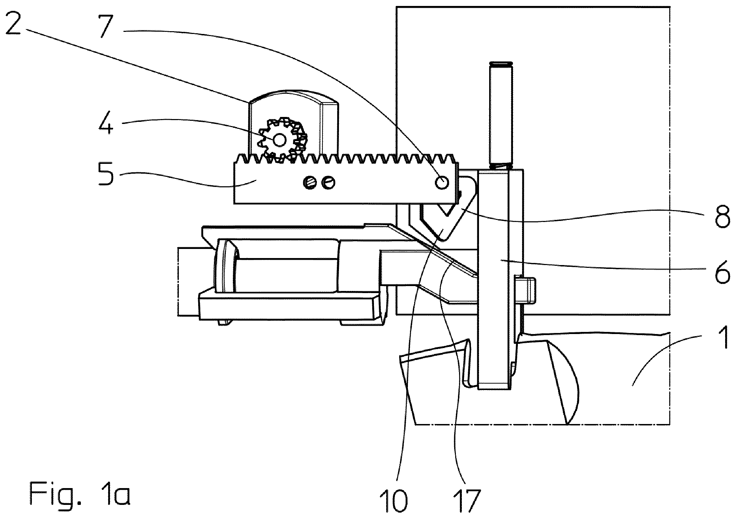

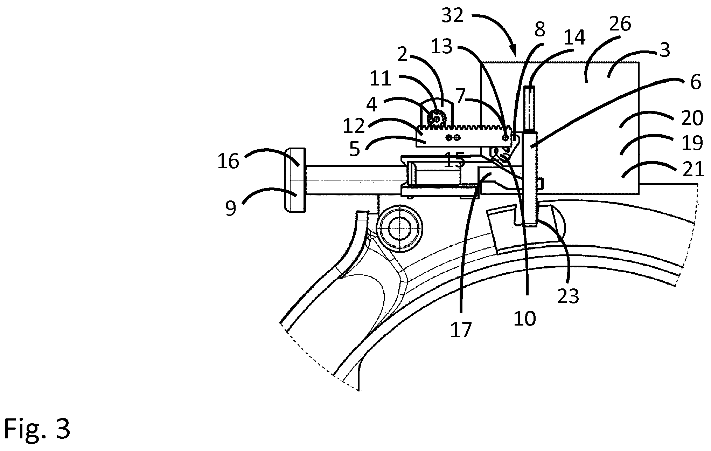

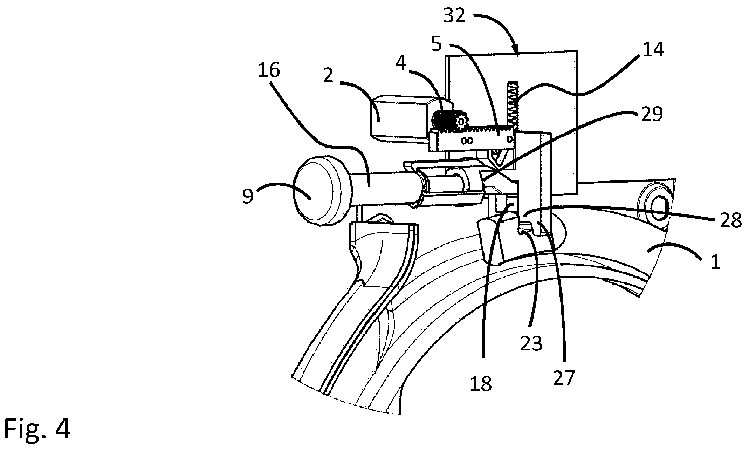

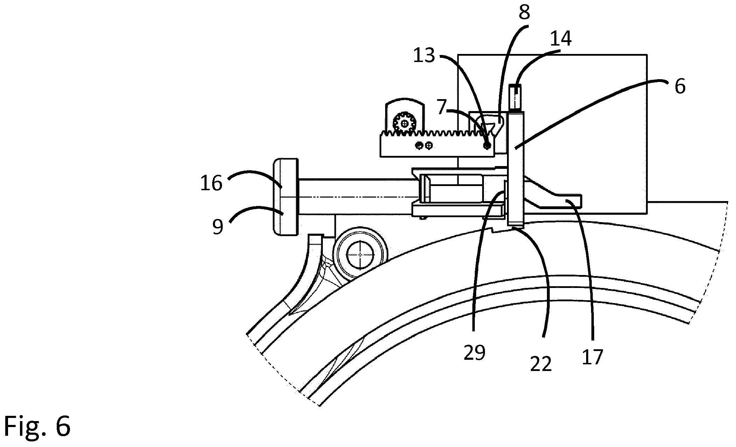

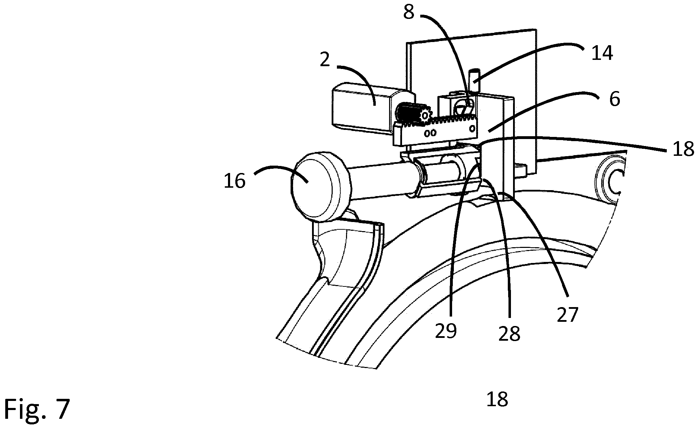

Figuren 1 bis 10 zeigen eine Ausführungsform des erfindungsgemäßen Schlosses in der Form eines Rahmenschlosses. Die erfindungsgemäße Vorrichtung ist allerdings auch auf andere Schlosstypen, z.B. Bügelschlösser, bei denen ein Sperrelement mit den freien Enden des Bügels wechselwirkt und das Sperrelement statt einer Schwenkbewegung eine Linearbewegung ausführt, anwendbar. Die Figuren 1 bis 4 zeigen dabei verschiedene Darstellungen des ohne das Gehäuse dargestellten, geschlossenen Schlosses. Das Schloss ist aus zwei Schenkeln 24 aufgebaut, die der Aufnahme, Führung und Verstellung des Sperrelements 1 dienen. Das Sperrelement 1 weist zwei Eingriffe 15, nämlich einen Sperreingriff 23 und einen Sicherungseingriff 22 auf. Im geschlossenen Zustand des Schlosses greift ein Verriegelungselement 6 in den Sperreingriff 23 des Sperrelements 1 ein und verhindert so dessen Verstellung in den Schenkeln 24.

Zum Öffnen des Schlosses wird eine Schließeinheit 32 betätigt, die einen elektrisch betreibbaren Aktuator 2 aufweist, der über ein Kopplungselement 4 mit einem Stellglied 5 verbunden ist, das ein Führungsglied 7 aufweist, welches innerhalb einer Steuerkurve 8 bewegbar ist (Fig. 1a). Die Steuerkurve 8 ist an dem zwischen dem Aktuator 2 und dem Sperrelement 1 angeordneten Verriegelungselement 6 ausgebildet.

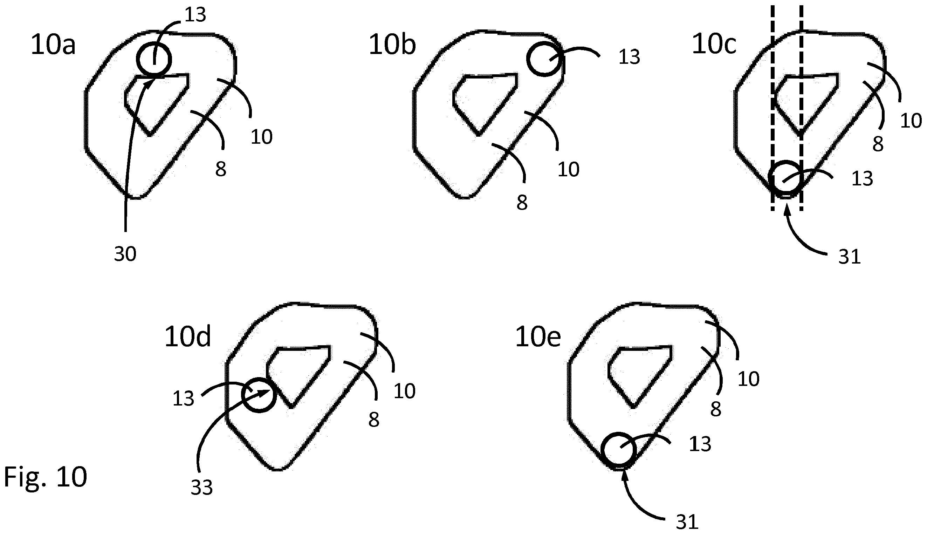

Die Steuerkurve 8 ist als Führungsnut 10 mit einer polygonähnlich ausgebildeten geschlossenen Bahn gestaltet. Die Steuerkurve 8 weist eine Sperrposition 30, eine Führungsposition 31 und eine Sicherungsposition 33 auf (Fig. 10).

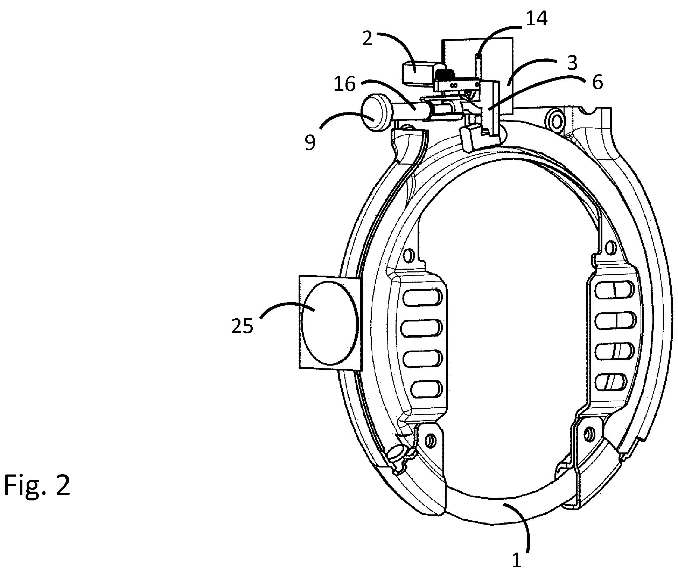

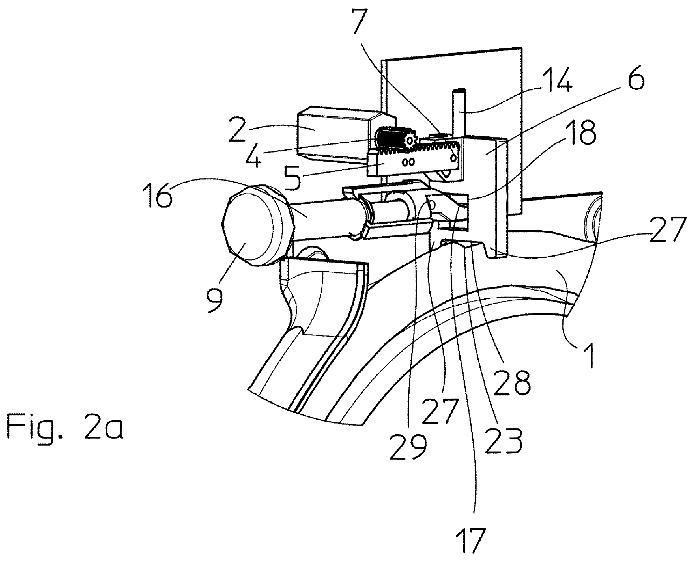

Das Kopplungselement 4 des in den Figuren 1 bis 10 gezeigten Ausführungsbeispiels ist als ein Ritzel 11 gebildet, das in die Verzahnung des als Zahnstange 12 gebildeten Stellglieds 5 eingreift. Des Weiteren weist das Verriegelungselement 6 eine Ausnehmung 18, zwei Verriegelungselementschenkel 27 und einen Steg 28 auf. Die Verriegelungselementschenkel 27 und der Steg 28 greifen in den Sperreingriff 23 (Fig. 2a) oder in den Sicherungseingriff 22 ein zum Blockieren einer Verstellung des Sperrelements 1. Darüber hinaus ist dem Verriegelungselement 6 ein kraftspeicherndes Element 14 zugeordnet, welches in Form einer Druck- und/oder Zugfeder gebildet ist, die eine Kraft zur Verstellung des Verriegelungselements 6 in den verriegelten Zustand des Sperrelements 1 ausübt. Weiterhin weist die Schließeinheit 32 ein Betätigungselement 9 auf, welches als ein federnder Taster 16 mit einem Endanschlag 29 gebildet ist und dem ein Keil 17 zugeordnet ist, welcher in die Ausnehmung 18 des Verriegelungselementes 6 eingreift. Durch den Endanschlag 29 wird verhindert, dass Missbrauchskräfte, die das Schloss zu öffnen versuchen, über das Betätigungselement 9 Einfluss auf das Führungsglied 7 und auf den Aktuator 2 nehmen können.

Die Schließeinheit 32 weist eine Leiterplatte 26 auf, die eine RFID-Grundschaltung 3 und eine Schlüsseleinheit 19 umfasst. Der RFID-Grundschaltung ist eine Antenne 25 zugeordnet, die dem Empfang eines RFID-Signals oder eines NFC-Signals dient. Die RFID-Grundschaltung 3 ist als passive RFID-Grundschaltung gebildet, das heißt sie umfasst einen RFID-Transponder, der über eine elektrische Leitung und über einen Schalter mit dem Aktuator 2 verbunden ist. Darüber hinaus ist zwischen dem Schalter und dem RFID-Transponder ein Zwischenenergiekurzzeitspeicher in Form eines Kondensators angeordnet, der der kurzzeitigen Speicherung elektrischer Energie dient.

Die RFID-Grundschaltung 3 ist über eine elektrische Leitung auch mit der Schlüsseleinheit 19 verbunden. Diese weist ein Speicherelement 20 für das Abspeichern einer oder mehrerer Aktivierungsschlüssel und einen Komparator 21 auf. Im Komparator 21 wird einer oder mehrere von einem nicht gezeigten externen Endgerät gesendete Endgeräteschlüssel mit dem bzw. mit den Aktivierungsschlüsseln verglichen. Das nicht näher dargestellte externe Endgerät umfasst ein RFID-Lesegerät als Sender zur Übertragung des Endgeräteschlüssels und der elektrischen Energie. Es ist als Mobiltelefon, Smart-Key, Key-Card oder als ein anderes mobiles elektrisches Gerät gebildet. Das Schloss ist folglich über ein vom externen Endgerät ausgesandtes RFID-Signal oder NFC-Signal betätigbar, wobei es bevorzugt über ein NFC-Signal betätigbar ist.

Im Folgenden wird ausgehend von einem verriegelten Schloss das Entriegeln des Sperrelements 1 zum Öffnen des Schlosses beschrieben. Im Gegensatz zum Schließen des Schlosses erfolgt das Öffnen des Schlosses nicht rein manuell, sondern durch die elektrische Betätigung des Aktuators 2. Das Schloss selber weist keine eigene Energiequelle auf und ist auch nicht über eine elektrische Leitung mit einer externen Energiequelle verbunden. Grundsätzlich ist es aber auch möglich, eine Batterie oder einen Akkumulator im Schloss zu verbauen. Die elektrische Energie zur Betätigung des Aktuators wird vorliegend über die induktive Übertragung elektromagnetischer Wellen insbesondere über RFID oder NFC bereitgestellt. Dazu wird das RFID-Lesegerät in einem externen Endgerät aktiviert, das das RFID- oder NFC-Signal an die Antenne 25 des Schlosses sendet und den Kondensator auflädt. Das Signal wird dem RFID-Transponder in der RFID-Grundschaltung 3 zugeführt. Das Signal enthält einen Endgeräteschlüssel, welcher im Komparator 21 der Schlüsseleinheit mit dem im Speicherelement 20 hinterlegten Aktivierungsschlüsseln verglichen wird. Stimmen die Schlüssel miteinander überein, wird der Schalter betätigt und die elektrische Energie aus dem Kondensator auf den Aktuator 2 übertragen. Da das Sperrelement 1 gesperrt ist, also das Verriegelungselement 6 in den Sperreingriff 23 des Sperrelements 1 eingreift, befindet sich das als Führungsbolzen 13 gebildete Führungsglied 7 innerhalb der Steuerkurve 8 in der Sperrposition 30 (vgl. Fig. 1-4 und Fig. 10a). Durch die zur Verfügung gestellte elektrische Energie treibt das Ritzel 11 die Zahnstange 12 an, so dass der Führungsbolzen 13 aus der Sperrposition 30 im Uhrzeigersinn in Richtung des Verriegelungselements 6 bewegt wird (vgl. Figur 10b). Die Sperrposition 30 kann der Führungsbolzen 13 also nur durch die durch den Aktuator 2 durchgeführte laterale Bewegung verlassen.

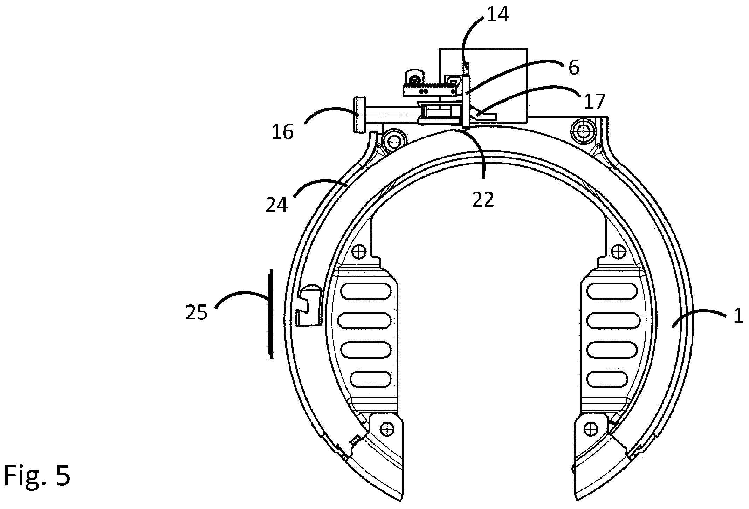

Im nächsten Schritt (vgl. Fig. 5-7) wird durch den Nutzer manuell der federnde Taster 16 bis zum Endanschlag 29 eingedrückt, so dass der Keil 17 in die Ausnehmung 18 des Verriegelungselements 6 eingreift und dieses nach oben, gegen die Kraft der Feder schiebt. Dadurch wird die im Verriegelungselement 6 ausgebildete Steuerkurve 8 auch nach oben in Richtung der Feder bewegt. Dabei gleitet der Führungsbolzen 13 relativ zum Verriegelungselement 6 in der Führungsnut 10 nach unten in die Führungsposition 31 (vgl. Figur 10c), in welcher das Verriegelungselement 6 axial vom Sperrelement 1 weg verstellt ist. Das Verriegelungselement 6 greift also nicht mehr in den Sperreingriff 23. Das Sperrelement 1 ist freigegeben und öffnet sich durch eine in den Figuren nicht dargestellte, gespannte Feder, die innerhalb der Schenkel 24 angeordnet ist. Im Ergebnis wird durch die Erfindung ein Aktivierungsschlüssel übertragen, der die motorische Verstellung des Aktuator bewirkt als Voraussetzung, dass eine berechtigte Person mittels des Tasters das Rahmenschloss öffnen kann.

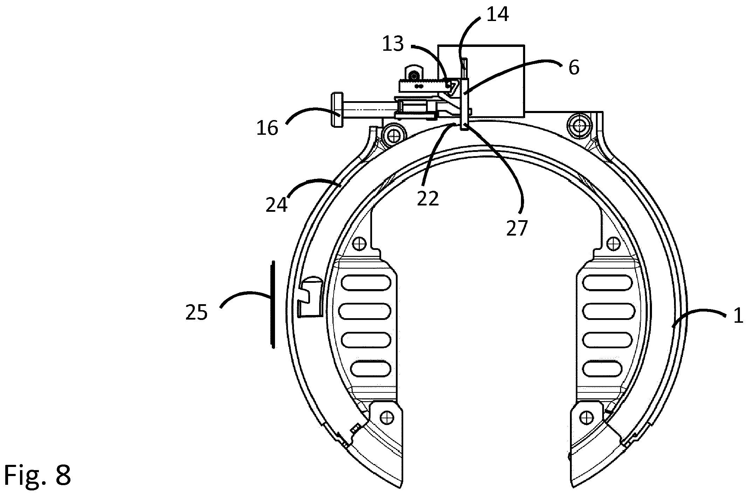

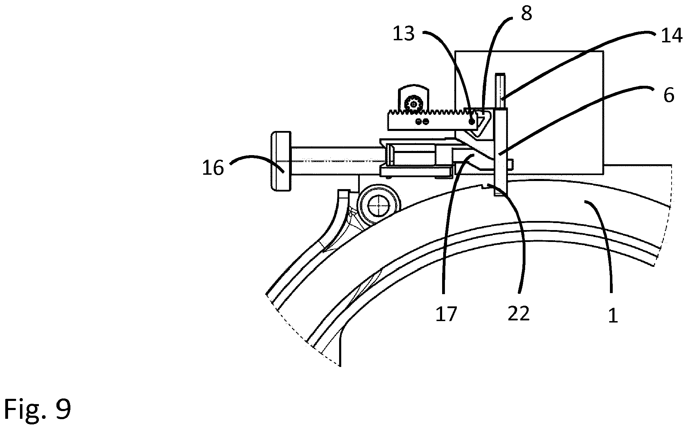

Durch Loslassen des federnden Tasters 16 (vgl. Fig. 8 und Fig. 9) wird der Keil 17 wieder aus der Ausnehmung 18 gedrückt (vorzugsweise durch eine Feder). Dadurch wird das Verriegelungselement 6 durch die Feder 14 wieder nach unten in Richtung des Sperrelements 1 geführt und der Führungsbolzen 13 wird aufgrund der asymmetrischen Ausbildung der Steuerkurve 8 im Uhrzeigersinn in die Sicherungsposition 33 bewegt (Fig. 10d). Die asymmetrische Gestaltung der Steuerkurve 8 ist durch gestrichelte Linien 34 in Figur 10c dargestellt. Das Verriegelungselement 6 greift dabei in den Sicherungseingriff 22 des Sperrelements 1 ein, so dass das Sperrelement 1 in der Offenstellung gesichert ist und z.B. während der Fahrt keine Verriegelung des Rahmenschlosses mit einer Blockade des Rades erfolgen kann.

Im Gegensatz zu herkömmlichen elektronischen Schlössern, oder auch Schlössern, die auf RFID-Technologie basieren, benötigt das erfindungsgemäße Schloss beim Öffnen elektrische Energie, während das Schließen des Schlosses rein mechanisch erfolgen kann. Dazu wird der federnde Taster 16 wiederum betätigt und das Verriegelungselement 6 durch den in die Ausnehmung 18 eingreifenden Keil 17 nach oben in Richtung der Feder verschoben und der Führungsbolzen 13 wiederum in die Führungsposition 31 bewegt (Fig. 10e). Das Sperrelement 1 wird nun manuell über ein nicht dargestelltes Betätigungsglied, welches in einer Betätigungsgliedführungsnut an der Vorderseite des Schlosses angeordnet ist und mit dem Sperrelement 1 verbunden ist, bewegt bzw. geschlossen. Durch das anschließende Lösen des federnden Tasters 16 wird das Verriegelungselement 6 relativ zum Führungsbolzen 13 wieder nach unten bewegt, also der Führungsbolzen 13 in der Führungsnut 10 zwangsgesteuert in die Sperrposition 30 verstellt.

Alternativ kann der Sicherungseingriff 22 mit einem Konus geformt sein, der derart ausgestaltet ist, dass beim Betätigen des Betätigungsglieds das Verriegelungselement 6 aus dem Sicherungseingriff 22 gedrückt wird und gegen die Kraft des kraftspeichernden Elements 14 zurückweicht. Die Steuerkurve 8 ist an der dem Aktuator 2 zugewandten Seite leicht abgerundet und asymmetrisch ausgebildet. Durch das Loslassen des federnden Tasters 16 und aufgrund der Kraft des kraftspeichernden Elementes 14 bewegt sich der Führungsbolzen 13 im Uhrzeigersinn erneut in die Sperrposition 30. Das Verriegelungselement 6 greift in den Sperreingriff 23 ein und das elektronische Schloss ist verriegelt.

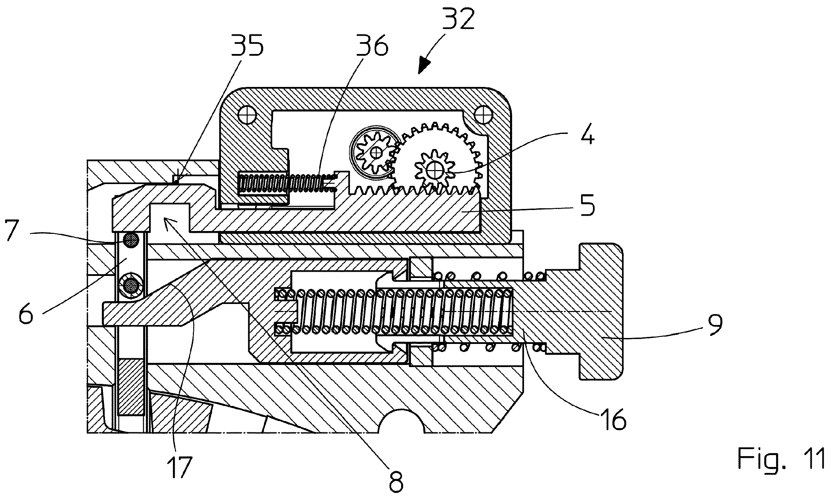

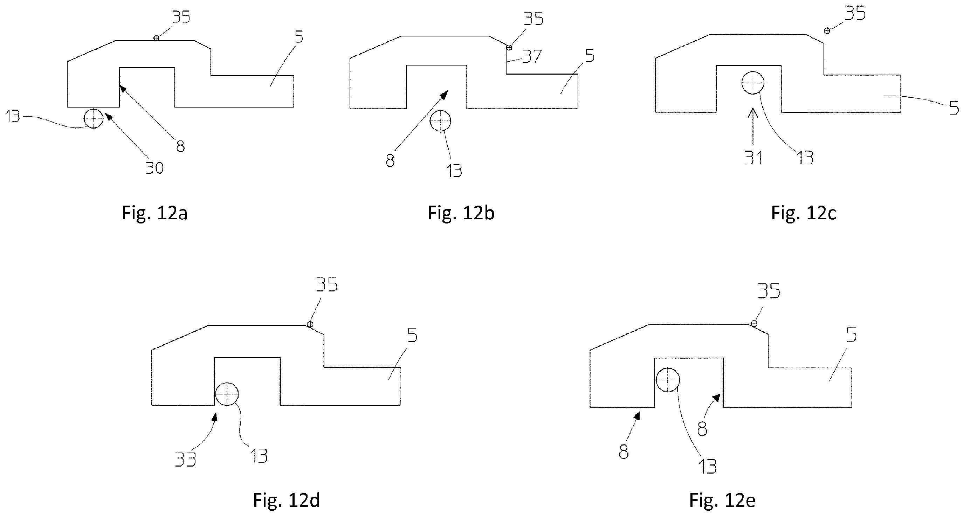

In den Fig. 11 und 12 ist eine weitere Ausführungsform gezeigt, bei der dem Stellglied 5 die Steuerkurve 8 und dem Verriegelungselement 6 das Führungsglied 7 zugeordnet ist. Die Betätigung dieser Ausführungsform erfolgt grundsätzlich gleich, das heißt durch das RFID-Lesegerät wird an die Schließeinheit 32 des verriegelten Schlosses der Endgeräteschlüssel übertragen und der Kondensator aufgeladen, so dass nach dem Schlüsselvergleich bei Übereinstimmung durch den Aktuator 2 das Ritzel 11 gedreht und so die Zahnstange 12 verstellt wird, so dass der Führungsbolzen 13 aus der in Fig. 12a gezeigten Position in die aus Fig. 12b ersichtlichen Position verstellt wird. Betätigung des federnden Tasters 16 ermöglicht über den Keil 17 die Verstellung des Verriegelungselements 6 mit dem Führungsbolzen 13 in die in Fig. 12c gezeigte Position.

Bei dieser Ausführungsform ist zu beachten, dass die Zahnstange 12 durch eine Rückstellfeder 36 beaufschlagt ist. Die sofortige Rückstellung wird aber durch eine Sperrfeder 35 unterbunden, die gleichfalls mit dem Verriegelungselement 6 verstellt wird. Fig. 12d zeigt die Konfiguration "Kindersicherung" nach Lösen des Tasters 16, in der die Zahnstange 12 wieder Richtung Ausgangslage gezogen ist. Durch erneutes Drücken des Tasters 16 wird das Verriegelungselement 6 nach oben verstellt und das Sperrelement 1 kann zum Schließen des Schlosses verstellt werden (Fig. 12e).

### Bezugszeichenliste

- 1: Sperrelement
- 2: Aktuator
- 3: RFID-Grundschaltung
- 4: Kopplungselement
- 5: Stellglied
- 6: Verriegelungselement
- 7: Führungsglied
- 8: Steuerkurve
- 9: Betätigungselement
- 10: Führungsnut
- 11: Ritzel
- 12: Zahnstange
- 13: Führungsbolzen
- 14: kraftspeicherndes Element
- 15: Eingriff
- 16: federnder Taster
- 17: Keil
- 18: Ausnehmung
- 19: Schlüsseleinheit
- 20: Speicherelement
- 21: Komparator
- 22: Sicherungseingriff
- 23: Sperreingriff
- 24: Schenkel
- 25: Antenne
- 26: Leiterplatte
- 27: Verriegelungselementschenkel
- 28: Steg
- 29: Endanschlag
- 30: Sperrposition
- 31: Führungsposition
- 32: Schließeinheit
- 33: Sicherungsposition
- 34: Linien (gestrichelt)
- 35: Sperrfeder
- 36: Rückstellfeder
- 37: Sperrfläche
- 38: Übersetzungsgetriebe
- 39: Rastfläche

## Patentansprüche

1. Schloss mit einem der Sperrung dienenden Sperrelement (1) und einem elektronisch betätigbaren Aktuator (2) mit zugeordneter RFID-Grundschaltung (3) zur Verstellung eines über ein Kopplungselement (4) mit dem Aktuator (2) verbundenen Stellglieds (5), **dadurch gekennzeichnet, dass** zwischen dem Stellglied (5) und dem Sperrelement (1) ein Verriegelungselement (6) angeordnet ist, von Stellglied (5) und Verriegelungselement (6) dem einen ein Führungsglied (7) zugeordnet ist und an dem anderen eine Steuerkurve (8) ausgebildet ist, der das Führungsglied (7) zur lösbaren Verriegelung des Verriegelungselements (6) anliegt, und dass ein mit dem Verriegelungselement (6) in Kontakt bringbares Betätigungselement (9) vorgesehen ist zur Entriegelung des Verriegelungselements (6) und zur Entsperrung des Sperrelements (1).

2. Schloss nach Anspruch 1, **dadurch gekennzeichnet, dass** dem Stellglied (5) das Führungsglied (7) zugeordnet ist und dem Verriegelungselement (6) die Steuerkurve (8), die als Führungsnut (10) mit einer geschlossenen Bahn gebildet ist.

3. Schloss nach Anspruch 2, **dadurch gekennzeichnet dass** die Führungsnut (10) polygonförmig oder polygon-ähnlich gebildet ist.

4. Schloss nach Anspruch 1, **dadurch gekennzeichnet, dass** dem Stellglied (5) die Steuerkurve (8) und dem Verriegelungselement (6) das Führungsglied (7) zugeordnet ist, und dass das Stellglied durch eine Rückstellfeder (36) beaufschlagt.

5. Schloss nach einem der Ansprüche 1 bis 4, **dadurch gekennzeichnet, dass** das Kopplungselement (4) als ein Ritzel (11) gebildet ist, das in eine Verzahnung des als eine Zahnstange (12) gebildeten Stellglieds (5) eingreift.

6. Schloss nach einem der Ansprüche 1 bis 5, **dadurch gekennzeichnet, dass** das Führungsglied (7) als ein Führungsbolzen (13) gebildet ist.

7. Schloss nach einem der Ansprüche 1 bis 6, **dadurch gekennzeichnet, dass** dem Verriegelungselement (6) ein kraftspeicherndes Element (14) zur Verstellung des Führungsglieds (7) innerhalb der Steuerkurve (8) und zur Sperrung des Sperrelements (1) zugeordnet ist.

8. Schloss nach einem der Ansprüche 1 bis 7, **dadurch gekennzeichnet, dass** das Sperrelement (1) mindestens einen Eingriff (15) aufweist.

9. Schloss nach einem der Ansprüche 1 bis 8, **dadurch gekennzeichnet, dass** das Betätigungselement (9) als federnder Taster (16) gebildet ist.

10. Schloss nach Anspruch 8, **dadurch gekennzeichnet, dass** dem federnden Taster (16) ein Keil (17) zugeordnet ist, dessen Ende in eine am Verriegelungselement (6) ausgebildete Ausnehmung (18) eingreift.

11. Schloss nach einem der Ansprüche 1 bis 10, **dadurch gekennzeichnet, dass** dem Stellglied (5) eine Sperrfeder (35) zugeordnet ist.

12. Schloss nach Anspruch 11, **dadurch gekennzeichnet, dass** die Sperrfeder (35) zur gemeinsamen Verstellung mit dem Verriegelungselement (6) zur gekoppelt ist.

13. Schloss nach Anspruch 12, das am Stellglied (5) eine Rastfläche (39) für eine Zwischenstellung der Sperrfeder (35) ausgebildet ist.

14. Kombination einer Schlüsseleinheit (19) mit einem Schloss nach einem der Ansprüche 1 bis 3, **dadurch gekennzeichnet, dass** eine Verbindung zwischen Schlüsseleinheit (19) und RFID-Grundschaltung (3), ein Speicherelement (20) zur Speicherung eines oder mehrerer Aktivierungsschlüssel und ein Komparator (21 zum Abgleich der Aktivierungsschlüssel mit einem von einem externen Endgerät gesendeten Endgeräteschlüssel vorgesehen sind.

15. System aus mindestens einem externen Endgerät und einer Kombination nach Anspruch 14, **dadurch gekennzeichnet, dass** das externe Endgerät ein RFID-Lesegerät umfasst.

16. Verfahren zur Betätigung eines Schlosses mit einem Sperrelement (1) und einem elektrisch betätigbaren Aktuator (2), welcher eine RFID-Grundschaltung (3) zugeordnet ist; dieses umfassend die folgenden Schritte:
a. Schließen des Schlosses durch eine mechanische Betätigung des Sperrelements (1),
b. Öffnen des Schlosses durch Übertragung von elektrischer Energie und einem Endgeräteschlüssel mittels RFID oder NFC von einem externen Endgerät auf die dem Aktuator (2) zugeordnete RFID-Grundschaltung (3).

17. Verfahren nach Anspruch 16, **dadurch gekennzeichnet, dass** beim Schließen gemäß Schritt a zusätzlich ein Endgeräteschlüssel mittels RFID oder NFC von dem externen Endgerät auf die dem Aktuator (2) zugeordnete RFID-Grundschaltung übertragen wird.
